# EUROPÄISCHE PATENTSCHRIFT

(11) **EP 2 061 580 B1**
(45) Veröffentlichungstag und Bekanntmachung des Hinweises auf die Patenterteilung: **06.03.2013**
(21) Anmeldenummer: 07803498.0
(22) Anmeldetag: 14.09.2007
(51) Int. Cl.: B01B 1/00, F01N 3/20, H05B 3/40

(54) **VORRICHTUNG ZUM VERDAMPFEN EINES REAKTIONSMITTELS**
DEVICE FOR EVAPORATING A REACTANT
DISPOSITIF D'ÉVAPORATION D'UN RÉACTIF

(30) Priorität: 02.10.2006 DE 102006047042
(43) Veröffentlichungstag der Anmeldung: 27.05.2009
(60) Teilanmeldung: 11182510.5
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); HIRTH, Peter, 51503 Rösrath (DE); HÄRIG, Thomas, 53819 Neunkirchen-Seelscheid (DE); BRUGGER, Marc, 53819 Neunkirchen-Seelscheid (DE)
(74) Vertreter: Rössler, Matthias
(86) Internationale Anmeldenummer: PCT/EP2007/059714
(87) Internationale Veröffentlichungsnummer: WO 2008/040628

(56) Entgegenhaltungen:
- WO-A-00/32914
- DE-A1- 19 818 448
- DE-U1- 20 216 509
- US-A- 4 477 715

## Beschreibung

Gegenstand der vorliegenden Erfindung ist eine Vorrichtung und ein Verfahren zum Verdampfen eines Reaktionsmittels wie insbesondere eines Reduktionsmittelvorläufers oder einer Reduktionsmittelvorläuferlösung. Besonders bevorzugt kann die Erfindung zur Bereitstellung von Reduktionsmittel für die selektive katalytische Reduktion (SCR, Selective Catalytic Reduction) von Stickoxiden im Abgas von Verbrennungskraftmaschinen eingesetzt werden. Insbesondere kann die Erfindung zur Verdampfung einer Harnstoff-Wasserlösung eingesetzt werden.

Das Abgas von Verbrennungskraftmaschinen enthält Stoffe, deren Emission in die Umwelt in vielen Ländern unerwünscht ist. Beispielsweise enthalten die Abgase von Verbrennungskraftmaschinen oftmals Stickoxide (NOx), deren Anteil im Abgas einerseits durch innermotorische Maßnahmen wie beispielsweise die Wahl eines geeigneten Betriebspunktes und andererseits durch eine Abgasaufbereitung reduziert werden kann. Zur Reduktion des Anteils von Stickoxiden im Abgas von Verbrennungskraftmaschinen ist das Verfahren der selektiven katalytische Reduktion (SCR, Selective Catalytic Reduction) bekannt, bei dem ein selektiv auf die Stickoxide wirkendes Reduktionsmittel wie beispielsweise Ammoniak eingesetzt wird.

Oftmals wird Ammoniak in Form eines Ammoniakvorläufers, der Ammoniak abspalten oder zu Ammoniak reagieren kann, zugegeben. Hierbei kommt regelmäßig eine Harnstoff-Wasserlösung zum Einsatz, die leicht und risikoarm zu bevorraten und in mobilen Anwendungen sogar mitzuführen ist. Wird nun diese Lösung in flüssiger Form dem Abgas zugegeben, kann es zu Schädigungen von Komponenten des Abgassystems wie beispielsweise von Katalysatorträgerkörpern kommen, da das relativ kalte Wasser zu einer punktuellen Abkühlung dieser Komponenten führt. Um dies zu umgehen, kann das Reduktionsmittel bzw. der Reduktionsmittelvorläufer auch in Form von Dampf zugegeben werden. Solche Verdampfungen stellen an die einzusetzende Regeltechnik sehr hohe Ansprüche, wenn stark dynamische Systeme vorliegen, bei denen sich der Stickoxidanteil im Abgas schnell ändern kann und somit auch die Zugabe von Reduktionsmittel hoch dynamisch erfolgen muss.

Die WO-A-00/32914 betrifft eine Vorrichtung zum Nachbehandeln von Abgasen einer Brennkraftmaschine, mit einem der Reduktion von NOx-Bestandteilen der Abgase dienenden Reduktionskatalysator mit einer Reduktionsmittelzufuhr, einer Reduktionsmitteldosiereinrichtung und einer Reduktionsmittelverdampfungseinrichtung, wobei die Reduktionsmitteldosierung und die zumindest teilweise Verdampfung mittels zumindest einer am Abgasrohr vorgesehenen Düse erfolgt.

Die DE-A1-198 18 448 betrifft ein Verfahren und eine Vorrichtung zur katalytischen Reduzierung von Stickoxiden im Abgas einer Verbrennungsanlage, wobei ein Abgas einen Katalysator durchströmt und dem Abgas vor Durchströmen des Katalysators eine Reduktionsmittellösung zudosiert wird, wobei die Reduktionsmittellösung temperiert und in ihrer Dichte eingestellt wird.

Die DE-U1-202 16 509 betrifft eine elektrische Heilung mit einem rohrförmigen Gehäuse in welcher ein oder mehrere PTC-Heizelemente und wenigstens ein Paar metallische Wärmeverteiler vorgesehen sind. Diese elektrische Heizeinrichtung ist zum Einsatz in PKWs gedacht.

Ausgehend von diesem Stand der Technik liegt der Erfindung die Aufgabe zugrunde, ein verfahren und eine Vorrichtung bereitzustellen, mit dem eine einfache Regelung der Verdampfung möglich ist.

Diese Aufgabe wird gelöst durch eine Vorrichtung und ein Verfahren mit den Merkmalen der unabhängigen Ansprüche. Die abhängigen Ansprüche sind auf vorteilhafte Weiterbildungen gerichtet.

Die erfindungsgemäße Vorrichtung zum Verdampfen mindestens eines der folgenden Reaktionsmittel: a) eine Reduktionsmittelvorläuferlösung und b) eines Reduktionsmittelvorläufers umfasst mindestens eine elektrisch beheizbare Erwärmungszone. Erfindungsgemäß weist die Erwärmungszone mindestens ein elektrisch betreibbares Heizelement mit einem Heizwiderstand auf. Der Heizwiderstand ist um eine signifikante Temperatur selbstregelnd.

Alternativ oder zusätzlich weist der Heizwiderstand einen Verlauf des elektrischen Widerstandes in Abhängigkeit von der Temperatur mit mindestens einem Wendepunkt auf. Unter einem selbstregelnden Heizwiderstand wird ein Heizwiderstand verstanden, der durch Veränderung seines elektrischen Widerstandes eine bestimmte Temperatur, die so genannte signifikante oder Nenntemperatur, hält. Insbesondere handelt es sich dabei um sogenannte PTC-Widerstände (positive temperature coefficient, positiver Temperaturkoeffizient), die einen Temperaturbereich aufweisen, in dem der Widerstand gegen die Temperatur stark ansteigt, und insbesondere einen Bereich, in dem diese Steigung sich ändert. Unter einem Reduktionsmittel wird hier insbesondere ein Reduktionsmittel für die selektive katalytische Reduktion von Stickoxiden verstanden. Insbesondere bevorzugt ist hierbei der Einsatz von Ammoniak als Reduktionsmittel, so dass der Reduktionsmittelvorläufer sämtliche Stoffe umfasst, die zu Ammoniak reagieren oder die Ammoniak abspalten können. Insbesondere wird hierbei eine wässrige Lösung mindestens eines Ammoniakvorläufers verstanden. Beispielsweise kann es sich hierbei um Harnstoff-Wasserlösungen handeln, wie sie unter dem Markennamen "AdBlue" vertrieben werden oder aber auch um Lösungen von Harnstoff und/oder Ammoniumformiat, wie sie beispielsweise unter dem Markennamen "Denoxium" vertrieben werden.

Bevorzugt ist die erfindungsgemäße Vorrichtung Teil einer Vorrichtung zur selektiven katalytischen Reduktion von Stickoxiden im Abgas einer Verbrennungskraftmaschine, bei der stromabwärts der Vorrichtung zum Verdampfen ein SCR-Katalysator ausgebildet ist. Bevorzugt ist hierbei das zwischen der Vorrichtung zum Verdampfen und dem SCR-Katalysator ein Hydrolysekatalysator zur Hydrolyse eines Reduktionsmittelvorläufers zu Reduktionsmittel ausgebildet ist. Unter einer Verbrennungskraftmaschine werden hier sowohl stationäre Verbrennungskraftmaschinen wie beispielsweise in Blockheizkraftwerken als auch mobile Verbrennungskraftmaschinen beispielsweise in Kraftfahrzeugen, Flugzeugen und Wasserfahrzeugen verstanden. Bevorzugt findet die erfindungsgemäße Vorrichtung Anwendung in mobilen Anwendungen, also in Kraftfahrzeugen, Automobilen, Lastkraftwagen, Personenkraftwagen, motorisierten Zweirädern, Quads, All Terrain Vehicles, Wasserfahrzeugen und Flugzeugen.

Unter einem Wendepunkt wird ein Punkt im Verlauf des elektrischen Widerstandes in Abhängigkeit von der Temperatur verstanden, an welchem der Verlauf sein Krümmungsverhalten ändert. An solchen Stellen beträgt die zweite Ableitung des Verlaufs gegen die Temperatur null.

Die signifikante Temperatur zeichnet sich dadurch aus, dass der Verlauf des elektrischen Widerstandes bei dieser signifikanten Temperatur eine signifikante Änderung des Widerstandes aufweist. Unter einer signifikanten Änderung wird insbesondere eine Änderung um mehr als 1 Ohm/Kelvin verstanden. Unter der signifikanten Temperatur wird im Sinne dieser Erfindung die Regeltemperatur verstanden, um die herum der selbstregelnde Heizleiter die Temperatur regelt. Bevorzugt liegt dabei signifikante Temperatur im Bereich einer Betriebstemperatur der erfindungsgemäßen Vorrichtung, d.h. im Wesentlichen im Bereich von 5°C unterhalb bis 5°C oberhalb der Betriebstemperatur. Durch das Verhalten des Verlaufs bei der signifikanten Temperatur kommt es hierbei in besonders vorteilhafter Weise zu einer Selbstregelung des Heizelementes. Bevorzugt weist der Verlauf in diesem Bereich und auch im Bereich des Wendepunktes eine positive Steigung auf. Dies führt in besonders vorteilhafter Weise dazu, dass ein selbst regelnder Heizwiderstand vorliegt, da eine positive Steigung dazu führt, dass bei einer Erhöhung der Temperatur der elektrische Widerstand ansteigt. Aufgrund der inversen Proportionalität der Heizleistung zum Widerstand führt dies zu einer Senkung der Heizleistung und damit zu einer Abkühlung in Richtung der Solltemperatur.

Darüber hinaus weist bei der erfindungsgemäßen Vorrichtung ein Verlauf des elektrischen Widerstands in Abhängigkeit von der Temperatur mindestens einen Wendepunkt und die Ableitung des Verlaufs des elektrischen Widerstandes im Bereich der Temperatur des Wendepunktes eine Halbwertsbreite (FWHM, Full Width Half Maximum, volle Breite bei halber Höhe) von höchstens 40 K (Kelvin) auf. Die Halbwertsbreite entspricht der vollen Breite der Ableitung des Verlaufs bei halber Höhe der Ableitung des Verlauts (FWHM, Full width half maximum).

Diese Halbwertsbreite führt dazu, dass ein sehr schneller Regelkreis realisiert werden kann, da diese steile Veränderung des Widerstandes gegen die Temperatur zu einem schnellen Regeln eines selbst regelnden elektrischen Heizwiderstandes führt. Bevorzugt ist hierbei eine Halbwertsbreite von höchstens 20 K, besonders bevorzugt höchstens 10 K.

Gemäß einer weiteren vorteilhaften Ausgestaltung der erfindungsgemäßen Vorrichtung weist der Verlauf des elektrischen Widerstandes gegen die Temperatur im Bereich der signifikanten Temperatur eine Steigung von mehr als 1 Ohm pro Kelvin auf.

Dieser Steigungsbereich hat sich als besonders vorteilhaft erwiesen. Eine kleinere Steigung als 1 Ohm/K führt zu einem zu langsamen Regelverhalten des Heizwiderstandes

Gemäß einer weiteren vorteilhaften Ausgestaltung der erfindungsgemäßen Vorrichtung weist der Verlauf des elektrischen Widerstandes eine signifikante Temperatur auf, die einer Betriebstemperatur der Erwärmungszone entspricht.

So wird erreicht, dass die Temperatur des Heizwiderstandes stets bestrebt ist, die Betriebstemperatur der Erwärmungszone zu erreichen. Unter einer Entsprechung der signifikanten Temperatur zur Betriebstemperatur der Erwärmungszone wird insbesondere auch verstanden, dass die signifikante Temperatur so gewählt wird, dass diese unter Berücksichtigung der baulichen Ausgestaltung des Heizelementes insbesondere unter Berücksichtigung möglicher Abwärmverluste dazu führt, dass die Erwärmungszone die Betriebstemperatur aufweist, wenn der Heizwiderstand bzw. das Heizelement die signifikante Temperatur aufweist. Dies kann beispielsweise auch dazu genutzt werden, entsprechende Heizelemente, bei denen die Temperatur des Wendepunktes über der Betriebstemperatur liegt, wobei eine gezielte Wärmeabfuhr eingesetzt wird, so dass der signifikanten Temperatur des Heizelementes im wesentlichen die Betriebstemperatur der Erwärmungszone entspricht.

Gemäß einer weiteren vorteilhaften Ausgestaltung der erfindungsgemäßen Vorrichtung umfasst die Erwärmungszone mindestens eine der folgenden Strukturen:
a) ein Verdampfervolumen geeignet zur Verdampfung des Reaktionsmittels und
b) ein Erhitzungsvolumen geeignet zur Erhitzung des verdampften Reaktionsmittels.

So kann durch die Erhitzung insbesondere auch eine zumindest teilweise Pyrolyse oder Thermolyse d. h. eine thermische Zersetzung des Reduktionsmittelvorläufers zu Reduktionsmittel erreicht werden.

Gemäß einer weiteren vorteilhaften Ausgestaltung der erfindungsgemäßen Vorrichtung ist mindestens ein Heizwiderstand aus mindestens einem der folgenden Materialien ausgebildet:
a) ein PTC-Widerstand (PTC, Positive Temperature Coefficient, positiver Temperaturkoeffizient);
b) eine Titanatkeramik;
c) eine dotierte Titanatkeramik; und
d) eine Bariumtitanatkeramik.

Ein PTC-Widerstand vergrößert seinen Widerstand bei Erhöhung der Temperatur zumindest in gewissen Temperaturbereichen. Titanatkeramik und insbesondere dotierte Titanatkeramik können insbesondere an ihrer polykristallinen Form als PCT-Widerstand eingesetzt werden. Unter einer Bariumtitanatkeramik wird insbesondere BaTiO₃ verstanden.

Gemäß einer weiteren vorteilhaften Ausgestaltung der erfindungsgemäßen Vorrichtung liegt die signifikante Temperatur des Verlaufes im Bereich von 140°C bis 180°C.

Ganz besonders bevorzugt ist hierbei ein Temperaturbereich im Bereich von 140°C bis 150°C. Bei höheren Temperaturen kann es zu einer Verblockung der entsprechenden Erwärmungszone kommen, da dann unerwünschte Nebenreaktionen vermehrt ablaufen. Insbesondere bei Einsatz von Harnstoff-Wasserlösungen hat sich eine Betriebstemperatur im Temperaturbereich von 140°C bis 150°C und entsprechend ausgewählte Bereiche der Temperaturen der Wendepunkte als besonders vorteilhaft erwiesen. Hierbei findet eine im Wesentlichen vollständige Verdampfung statt, wobei unter einer im Wesentlichen vollständigen Verdampfung insbesondere eine Verdampfung von 95 Massen % und mehr der Harnstoff-wasserlösung verstanden wird.

Gemäß einer weiteren vorteilhaften Ausgestaltung der erfindungsgemäßen Vorrichtung liegt die signifikante Temperatur des Verlaufs bei mindestens 300°C.

Hierbei handelt es sich in besonders vorteilhafter Weise um eine Erwärmungszone, die der Erhitzung einer bereits verdampften Reduktionsmittelvorläuferlösung oder eines Reduktionsmittelvorläufers dienen kann. Insbesondere führen diese Temperaturen zu einer zumindest teilweisen Thermo- und Pyrolyse, so dass gegebenenfalls ein stromabwärts ausgebildeter Hydrolysekatalysator kleiner ausgebildet werden kann oder auf diesen verzichtet werden kann.

Gemäß einer weiteren vorteilhaften Ausgestaltung der erfindungsgemäßen Vorrichtung umfasst die Vorrichtung mindestens einen selbst regelnden Heizwiderstand.

Unter einem selbst regelnden Heizwiderstand wird ein Widerstand verstanden, welcher ohne weitere Regeltechnik die grundsätzliche Einhaltung einer Solltemperatur erlaubt. Insbesondere werden PTC-Halbleiter oder PTC-Kaltleiter als selbst regelnde Heizwiderstände verstanden.

Gemäß einem weiteren Aspekt der vorliegenden Erfindung wird auch ein Verfahren zum Verdampfen mindestens eines der folgenden Reaktionsmittel: a) einer Reduktionsmittelvorläuferlösung und b) eines Reduktionsmittelvorläufers vorgeschlagen. Hierbei wird das Reaktionsmittel durch ein elektrisch betriebenes Heizelement umfassend mindestens einen um eine signifikante Temperatur selbstregelnden elektrischen Heizwiderstand auf eine Solltemperatur erwärmt wird, die der signifikanten Temperatur entspricht.

Das erfindungsgemäße Verfahren erlaubt es in vorteilhafter Weise, eine sehr einfache, schnelle und effektive Regelung der Heizleistung eines Verdampfers für einen Reduktionsmittelvorläufer und/oder eine Reduktionsmittelvorläuferlösung zu erreichen.

Gemäß einer bevorzugten Ausgestaltung des erfindungsgemäßen Verfahrens ist mindestens ein Heizwiderstand selbstregelnd.

Besonders bevorzugt ist eine Verfahrensführung, bei der die Solltemperatur im Bereich von 140°C bis 180°C, besonders bevorzugt im Bereich von 140 bis 150°C, insbesondere bei Verdampfung einer Harnstoff-Wasserlösung liegt.

Diese Solltemperaturen haben sich als besonders vorteilhaft erwiesen, da hier eine im Wesentlichen vollständige Verdampfung der Reduktionsmittelvorläuferlösung erfolgt, ohne dass es zur Bildung von Ablagerungen durch Nebenreaktionen in der Erwärmungszone kommt.

Gemäß einer weiteren vorteilhaften Ausgestaltung des erfindungsgemäßen Verfahrens liegt die Solltemperatur bei mindestens 300°C.

Eine solche Temperatur hat sich insbesondere für die Erhitzung einer verdampften Reduktionsmittelvorläuferlösung und dadurch eine zumindest teilweise Thermo- und/oder Pyrolyse des Reduktionsmittelvorläufers zu Reduktionsmittel als vorteilhaft erwiesen.

Gemäß einer weiteren vorteilhaften Ausgestaltung des erfindungsgemäßen Verfahrens umfasst das Reaktionsmittel mindestens einen der folgenden Stoffe:
a) Harnstoff ((NH₂)₂CO);
b) Ammoniumformiat (HCOONH₄);
c) Ammoniumcarbamat (H₂NCOONH₄);
d) Ammoniumcarbonat ((NH₄)₂CO₃);
e) Ammoniumbicarbonat (NH₄HCO₃);
f) Ammoniumoxalat ((NH₄)₂(C₂O₄));
g) Ammoniumhydroxid (NH₄OH);
h) Cyansäure (HOCN);
i) Cyanursäure (C₃H₃N₃O₃);
j) Isocyansäure (HNCO);
k) Ammoniak (NH₃); und
l) einen Ammoniakvorläufer.

Insbesondere können neben einem mindestens einem dieser Stoffe auch Derivate dieser Stoffe zum Einsatz kommen. Bevorzugt sind hierbei neben Harnstoff auch Stoffe, die eine Senkung des Schmelzpunktes einer Harnstoff-Wasserlösung bewirken.

Die für die erfindungsgemäße Vorrichtung offenbarten Details und Ausgestaltungen sind auf das erfindungsgemäße Verfahren anwend- und übertragbar. Die für das erfindungsgemäße Verfahren offenbarten Details und Ausgestaltungen sind auf die erfindungsgemäße Vorrichtung anwend- und übertragbar.

Im Folgenden wird die Erfindung anhand der beigefügten Zeichnungen näher erläutert, ohne dass sie auf die dort gezeigten Ausführungsbeispiele beschränkt wäre. Es zeigen schematisch:
- Fig. 1:: ein erstes Ausführungsbeispiel einer erfindungsgemäßen Vorrichtung im Querschnitt;
- Fig. 2:: schematisch eine erfindungsgemäße Vorrichtung als Teil einer Vorrichtung zur selektiven katalytischen Reduktion;
- Fig. 3:: ein zweites Ausführungsbeispiel einer erfindungsgemäßen Vorrichtung im Querschnitt;
- Fig. 4:: einen exemplarischen Verlauf des Widerstandes gegen die Temperatur; und
- Fig. 5:: den Verlauf einer Ableitung des Verlaufs des Widerstandes gegen die Temperatur.

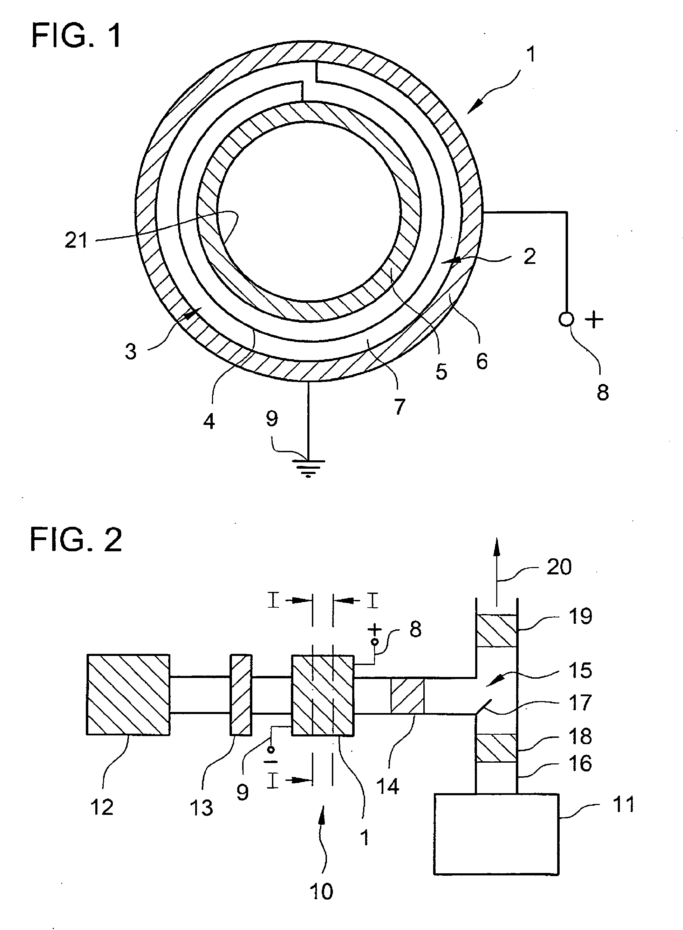

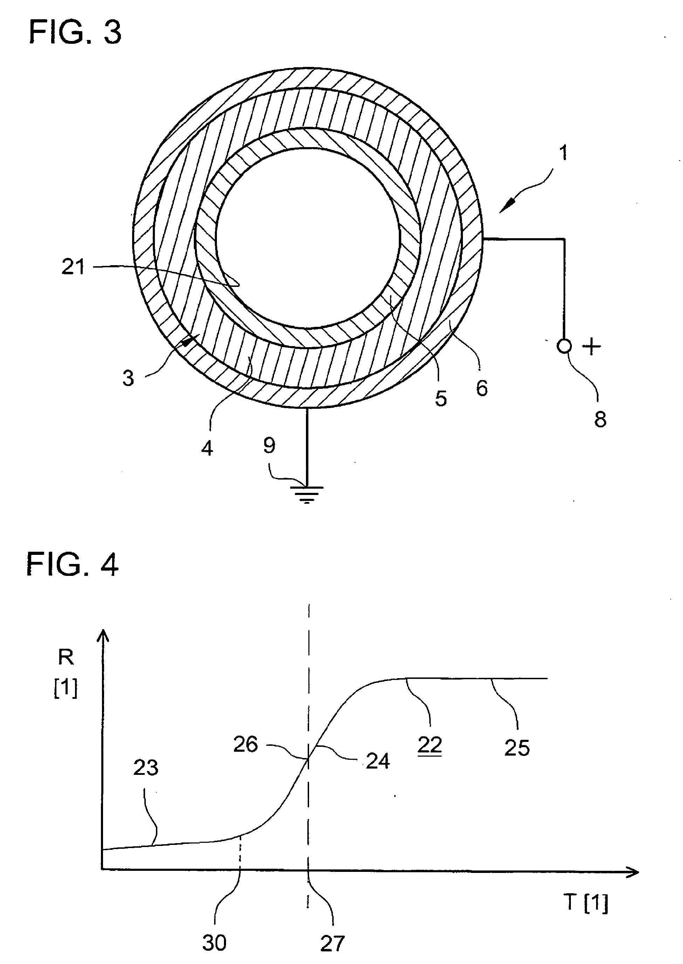

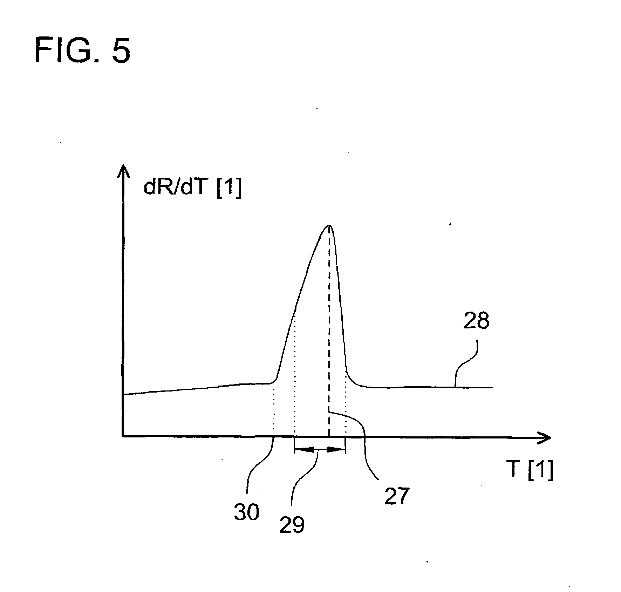

Fig. 1 zeigt eine erfindungsgemäße Vorrichtung 1 zum Verdampfen eines Reaktionsmittels. Die Vorrichtung 1 umfasst eine Erwärmungszone 2, die elektrisch beheizbar ist. Die elektrische Beheizung ist durch ein mindestens ein Heizelement 3 mit einem Heizwiderstand 4 verwirklicht. Das Heizelement 3 ist zwischen einem inneren Rohr 5 und einem äußeren Rohr 6 gehalten. Neben dem Heizwiderstand 4 kann das Heizelement 3 ein elektrisches Isolationsmaterial 7, also einen elektrischen Isolator, umfassen. Die Rohre 5, 6 sind jeweils mit unterschiedlichen Polen 8, 9 einer Stromversorgung verbunden. Bei dem Heizelement 3 handelt es sich um ein selbst regelndes Heizelement, wie weiter unten unter Bezug auf die Figuren 4 und 5 näher erläutert wird.

Fig. 2 zeigt schematisch die erfindungsgemäße Vorrichtung 1 als Teil einer Vorrichtung 10 zur selektiven katalytischen Reduktion von Stickoxiden im Abgas einer Verbrennungskraftmaschine 11. Die Vorrichtung 10 zur selektiven katalytischen Reduktion umfasst neben der erfindungsgemäßen Vorrichtung 1 zum Verdampfen mindestens eines Reaktionsmittels ein Reservoir 12 und ein Fördermittel 13. In dem Reservoir 12 wird das Reaktionsmittel also insbesondere eine Harnstoff-Wasserlösung bevorratet und durch das Fördermittel 13 zur Vorrichtung 1 zum Verdampfen überführt. In der Vorrichtung 1 zum Verdampfen erfolgt eine zumindest teilweise, bevorzugt im Wesentlichen vollständige Verdampfung der Harnstoff-Wasserlösung. Diese verdampfte Harnstoff-Wasserlösung wird zu einem Hydrolysekatalysator 14 geleitet, in dem eine Hydrolyse des Harnstoffs zu Ammoniak erfolgt. Das dann Ammoniak enthaltende Gas wird über eine Einspeisung 15 in die Abgasleitung 16 der Verbrennungskraftmaschine 10 eingeleitet. Im Bereich der Einspeisung 15 ist optional ein Leitmittel 17 angeordnet, mittels welchem eine bessere Einleitung des Ammoniak enthaltenen Gasgemisches erreicht werden kann. Stromaufwärts der Einspeisung 15 ist ein Oxidationskatalysator 18 ausgebildet, mittels dem eine Oxidation von Stickstoffmonoxid (NO) zu Stickstoffdioxid (NO₂) erreicht werden kann. Dadurch wird die Umsetzungsrate der Stickoxide weiter erhöht.

Stromabwärts der Einspeisung 15 ist ein SCR-Katalysator 19 ausgebildet, auf dem die selektive katalytische Reduktion der Stickoxide erfolgt. Den SCR-Katalysator verlässt ein gereinigter Abgasstrom 20. Die Katalysatoren 14, 18, 19 sind bevorzugt auf Katalysatorträgerkörpern, insbesondere auf Wabenkörpern in Form einer katalytisch aktiven Beschichtung ausgebildet.

Fig. 3 zeigt schematisch ein zweites Ausführungsbeispiel einer erfindungsgemäßen Vorrichtung 1 zum Verdampfen eines Reaktionsmittels. Gleiche Teile wie in Fig. 1 sind mit gleichen Bezugszeichen bezeichnet. Im Unterschied zum ersten Ausführungsbeispiel bildet hier der Heizwiderstand 4 des Heizelementes 3 eine Schicht, die den gesamten Raum zwischen dem inneren Rohr 5 und dem äußeren Rohr 6 ausfüllt. Auch hier sind inneres 5 und äußeres Rohr 6 mit entsprechenden Polen 8, 9 einer elektrischen Spannungsversorgung verbunden. Durch ein Verdampfervolumen 21 strömt dabei das zu verdampfende Reaktionsmittel bzw. das bereits verdampfte Reaktionsmittel.

Fig. 4 zeigt exemplarisch einen Verlauf 22 eines Widerstandes 11 in willkürlichen Einheiten gegen die Temperatur T in willkürlichen Einheiten. Es handelt sich hierbei um den Widerstand R des Heizwiderstandes 4. Mit steigender Temperatur T steigt dabei der Verlauf 22 nach einem ersten Plateaubereich 23 in einem Anstiegsbereich 24 stark an. Der Übergang vom ersten Plateaubereich 23 in den Anstiegsbereich 24 entspricht einer signifikanten Temperatur 30. Nach dem Anstiegsbereich 24 schließt sich bei noch höheren Temperaturen ein zweiter Plateaubereich an. Der Verlauf 22 weist im Anstiegsbereich 24 einen Wendepunkt 26 auf, der bei einer Temperatur 27 des Wendepunktes 26 liegt. Die signifikante Temperatur 30 entspricht erfindungsgemäß einer Solltemperatur, bei der das Reaktionsmittel verdampft wird.

Diese Solltemperatur liegt dabei für Harnstoff-Wasserlösungen bevorzugt zur Verdampfung im Bereich von 140 bis 150°C und für eine zumindest teilweise Thermo- bzw. Pyrolyse der Harnstoff-Wasserlösung bei Temperaturen von 350°C und mehr.

Fig. 5 zeigt schematisch eine Ableitung 28 des Verlaufs 22 nach der Temperatur. Bei der Temperatur 27 des Wendepunktes 26 liegt ein Maximum in der Ableitung 28 vor. Die Ableitung 28 weist hierum eine Halbwertsbreite (Full Width Half Maximum, FWHM, volle Breite bei halber Höhe) von 40 Kelvin und weniger auf. Bei der signifikanten Temperatur 30 liegt ein starker Anstieg der Steigung vor. Hierzu werden die Heizwiderstände 4 aus entsprechenden Materialien wie beispielsweise PTC-Leitern ausgebildet. Ein Beispiel für ein entsprechendes Material ist eine mit Fremdatomen dotierte Titanat-Keramik.

Das erfindungsgemäße Verfahren und die erfindungsgemäße Vorrichtung 1 zum Verdampfen eines Reaktionsmittels erlauben es in vorteilhafter Weise, eine leichte Regelung eines Verdampfungsprozesses insbesondere einer Harnstoff Wasserlösung zur Bereitstellung von Reduktionsmittel insbesondere im SCR-Prozess zu ermöglichen. Die eingesetzten Heizwiderstände 3 weisen eine signifikante Temperatur 30 auf, die einer Regeltemperatur des Heizwiderstandes entspricht. Durch ein entsprechend steilen Verlauf 22 in diesem Bereich kann auf eine weitere Regelungselektronik verzichtet werden.

### Bezugszeichenliste

- 1: Vorrichtung zum Verdampfen eines Reaktionsmittels
- 2: Erwärmungszone
- 3: Heizelement
- 4: Heizwiderstand
- 5: inneres Rohr
- 6: äußeres Rohr
- 7: elektrisches Isolationsmaterial
- 8: Pluspol
- 9: Masse
- 10: Vorrichtung zur selektiven katalytischen Reduktion
- 11: Verbrennungskraftmaschine
- 12: Reservoir
- 13: Fördermittel
- 14: Hydrolysekatalysator
- 15: Einspeisung
- 16: Abgasleitung
- 17: Leitmittel
- 18: Oxidationskatalysator
- 19: SCR-Katalysator
- 20: Abgasstrom
- 21: Verdampfervolumen
- 22: Verlauf
- 23: erster Plateaubereich
- 24: Anstiegsbereich
- 25: zweiter Plateaubereich
- 26: Wendepunkt
- 27: Temperatur des Wendepunktes
- 28: Ableitung
- 29: Halbwertsbreite

## Patentansprüche

1. Vorrichtung (1) zum Verdampfen mindestens eines der folgenden Reaktionsmittel:
a) einer Reduktionsmittelvorläuferlösung und
b) eines Reduktionsmittelvorläufers,
umfassend mindestens eine elektrisch beheizbare Erwärmungszone (2), wobei die Erwärmungszone (2) mindestens ein elektrisch betreibbares Heizelement (3) mit einem Heizwiderstand (4) aufweist, der um eine signifikante Temperatur (30) selbstregelnd ist, wobei der Verlauf (22) des elektrischen Widerstands in Abhängigkeit von der Temperatur mindestens einen Wendepunkt (26) aufweist und die Ableitung des Verlaufs (22) des elektrischen Widerstandes im Bereich der Temperatur (27) des Wendepunktes (26) ein Maximum aufweist, wobei die Ableitung des Verlaufs um das Maximum herum eine Halbwertsbreite von höchstens 40 Kelvin aufweist, und der Verlauf (22) des elektrischen Widerstands im Bereich der signifikanten Temperatur (30) eine Steigung von mehr als 1 Ohm pro Kelvin aufweist.

2. Vorrichtung (1) nach Anspruch 1, bei der der Verlauf des elektrischen Widerstandes eine signifikante Temperatur aufweist, die einer Betriebstemperatur der Erwärmungszone (2) entspricht.

3. Vorrichtung (1) nach einem der vorhergehenden Ansprüche, bei der die Erwärmungszone (2) mindestens eine der folgenden Strukturen umfasst:
a) ein Verdampfervolumen (21) geeignet zur Verdampfung des Reaktionsmittels und
b) ein Erhitzungsvolumen geeignet zur Erhitzung des verdampften Reaktionsmittels.

4. Vorrichtung (1) nach einem der vorhergehenden Ansprüche, bei der mindestens ein Heizwiderstand (4) aus mindestens einem der folgenden Materialien ausgebildet ist:
a) ein PTC Widerstand mit einem positiven Temperaturkoeffizienten;
b) eine Titanat-Keramik;
c) eine dotierte Titanat-Keramik;
d) eine Bariumtitanatkeramik.

5. Vorrichtung (1) nach einem der vorhergehenden Ansprüche, bei der die signifikante Temperatur (30) des Verlaufs im Bereich von 140°C bis 180°C liegt.

6. Vorrichtung (1) nach einem der vorhergehenden Ansprüche, bei der die signifikante Temperatur (30) des Verlaufs bei mindestens 300°C liegt.

7. Vorrichtung (1) nach einem der vorhergehenden Ansprüche, umfassend mindestens einen selbstregelnden Heizwiderstand.

## Claims

1. Device (1) for evaporating at least one of the following reactants:
a) a reducing agent precursor solution and
b) a reducing agent precursor,
comprising at least one electrically heatable heating zone (2), wherein the heating zone (2) has at least one electrically operable heating element (3) with a resistance heater (4) which is self-regulating about a significant temperature (30), wherein the profile (22) of the electrical resistance has, as a function of the temperature, at least one point of inflection (26) and the derivation of the profile (22) of the electrical resistance has, in the region of the temperature (27) of the point of inflection (26), a maximum, wherein the derivation of the profile has a full width half maximum around the maximum of at most 40 Kelvin and the profile (22) of the electrical resistance has, in the region of the significant temperature (30), a gradient of greater than 1 Ohm per Kelvin.

2. Device (1) according to claim 1, in which the profile of the electrical resistance has a significant temperature which corresponds to an operating temperature of the heating zone (2).

3. Device (1) according to one of the preceding claims, in which the heating zone (2) comprises at least one of the following structures:
a) an evaporator volume (21) suitable for evaporating the reactant, and
b) a heating volume suitable for heating the evaporated reactant.

4. Device (1) according to one of the preceding claims, in which at least one resistance heater (4) is formed from at least one of the following materials:
a) a PTC (positive temperature coefficient) resistor;
b) a titanate ceramic;
c) a doped titanate ceramic;
d) a barium titanate ceramic.

5. Device (1) according to one of the preceding claims, in which the significant temperature (30) of the profile lies in the range from 140°C to 180°C.

6. Device (1) according to one of the preceding claims, in which the significant temperature (30) of the profile is at least 300°C.

7. Device (1) according to one of the preceding claims, comprising at least one self-regulating resistance heater.

## Revendications

1. Dispositif (1) pour l'évaporation d'au moins un des réactifs suivants:
a) une solution de précurseur d'agent réducteur, et
b) un précurseur d'agent réducteur,
comprenant au moins une zone de chauffage à chauffage électrique (2), dans lequel la zone de chauffage (2) comprend au moins un élément chauffant (3) pouvant fonctionner à l'électricité avec une résistance de chauffage (4), qui est autorégulée autour d'une température importante (30), dans lequel la courbe (22) de la résistance électrique en fonction de la température présente au moins un point d'inflexion (26) et la dérivée de la courbe (22) de la résistance électrique présente un maximum dans la région de la température (27) du point d'inflexion (26), dans lequel la dérivée de la courbe présente autour du maximum une demi-largeur de 40 Kelvin au maximum, et la courbe (22) de la résistance électrique présente dans la région de la température importante (30) une pente de plus de 1 ohm par Kelvin.

2. Dispositif (1) selon la revendication 1, dans lequel la courbe de la résistance électrique présente une température importante, qui correspond à une température de fonctionnement de la zone de chauffage (2).

3. Dispositif (1) selon l'une quelconque des revendications précédentes, dans lequel la zone de chauffage (2) comprend au moins une des structures suivantes.
a) un volume d'évaporateur (21) convenant pour l'évaporation du réactif et
b) un volume de chauffage convenant pour le chauffage du réactif évaporé.

4. Dispositif (1) selon l'une quelconque des revendications précédentes, dans lequel ladite au moins une résistance de chauffage (4) est formée d'au moins un des matériaux suivants:
a) une résistance PTC avec un coefficient de température positif;
b) une céramique au titanate;
c) une céramique au titanate dopée;
d) une céramique au titanate de baryum.

5. Dispositif (1) selon l'une quelconque des revendications précédentes, dans lequel la température importante (30) de la courbe se situe dans la plage de 140°C à 180°C.

6. Dispositif (1) selon l'une quelconque des revendications précédentes, dans lequel la température importante (30) de la courbe se situe au moins à 300°C.

7. Dispositif (1) selon l'une quelconque des revendications précédentes, comprenant au moins une résistance de chauffage autorégulée.
